**Europäisches Patentamt**

**European Patent Office**

**Office européen des brevets**

(11) Veröffentlichungsnummer : **0 374 537 B1**

(12) **EUROPÄISCHE PATENTSCHRIFT**

(45) Veröffentlichungstag der Patentschrift :
**26.04.95 Patentblatt 95/17**

(51) Int. Cl.⁶ : **H04J 3/06**

(21) Anmeldenummer : **89121962.8**

(22) Anmeldetag : **28.11.89**

(54) **Demultiplexer mit Schaltung zur Verringerung des Wartezeitjitters.**

(30) Priorität : **19.12.88 DE 3842694**

(43) Veröffentlichungstag der Anmeldung :
**27.06.90 Patentblatt 90/26**

(45) Bekanntmachung des Hinweises auf die
Patenterteilung :
**26.04.95 Patentblatt 95/17**

(84) Benannte Vertragsstaaten :
**AT BE CH DE ES FR GB IT LI NL SE**

(56) Entgegenhaltungen :
**WO-A-87/06085
WO-A-88/07297
DE-A- 3 439 633**

(56) Entgegenhaltungen :
**8TH EUROPEAN CONFERENCE ON ELECTRO-
NICS, Stockholm, 13. - 17. Juni 1988, Seiten
84-88; R.P. Singh et al.: "Adaptive clock synchronization schemes for real-time traffic in
broadband packet networks"
PATENT ABSTRACTS OF JAPAN, Band
013074 (E-717), 20. Februar 1989; & JP-A-63
257 384 (SHARP) 25-10-1988**

(73) Patentinhaber : **ALCATEL N.V.
Strawinskylaan 341,
(World Trade Center)
NL-1077 XX Amsterdam (NL)**

(72) Erfinder : **Heiss, Rainer, Dr.
Lerchenstrasse 8
D-7015 Korntal-Münchingen 2 (DE)**
Erfinder : **Micke, Thomas
Christophstrasse 37
D-7000 Stuttgart 1 (DE)**

(74) Vertreter : **Pohl, Herbert, Dipl.-Ing et al
Alcatel SEL AG
Patent- und Lizenzwesen
Postfach 30 09 29
D-70449 Stuttgart (DE)**

## Beschreibung

Die Erfindung betrifft einen Demultiplexer nach dem Oberbegriff des Patentanspruchs 1.

Ein derartiger Demultiplexer ist bekannt aus der DE-A1-34 39 633. Bei dem dort beschriebenen Demultiplexer wird das Synchronsignal dadurch vom Worttakt der empfangenen Folge der Synchronwörter abgeleitet, daß mit Hilfe einer zum Demultiplexer übertragenen Zusatzinformation der Worttakt derart korrigiert wird, daß die Abstände zwischen seinen aufeinanderfolgenden Taktimpulsen gleich den Abständen der Synchronwörter des vom sendeseitigen Multiplexer in den Pulsrahmen einzufügenden, zum Pulsrahmen asynchronen Digitalsignals sind. Die durch die zum Pulsrahmen asynchrone Einfügung dieses Signals verursachte Taktschwankung der Synchronwörter, der sogenannte "Wartezeitjitter", wird somit im Demultiplexer deutlich verringert.

Nachteilig an dieser Lösung ist, daß sendeseitig eine Schaltung zur Erzeugung der Zusatzinformation notwendig ist und daß durch deren Übertragung Übertragungskapazität verloren geht.

Es ist daher die Aufgabe der Erfindung, einen Demultiplexer anzugeben, der die Verringerung des Wartezeitjitters durchführt, ohne daß im zugehörigen sendeseitigen Multiplexer irgendwelche Maßnahmen hierzu getroffen werden müssen.

Die Aufgabe wird gelöst, wie in Patentanspruch 1 angegeben. Weiterbildungen ergeben sich aus den Unteransprüchen.

Die Erfindung wird anhand der Figuren beispielsweise erläutert. Es zeigen:

Fig. 1 ein Blockschaltbild der Erfindungsgemäßen Schaltung zur Verringerung des Wartezeitjitters;

Fig. 2 ein erstes Ausführungsbeispiel des in Fig. 1 gezeigten Filters F,

Fig. 3 ein zweites Ausführungsbeispiel des in Fig. 1 gezeigten Filters F.

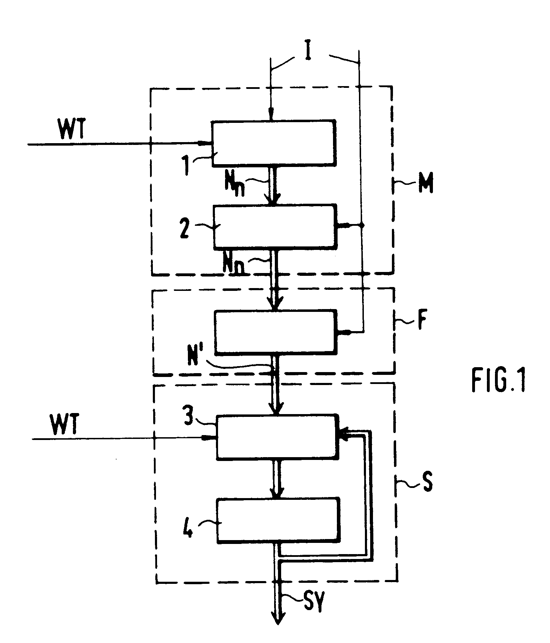

Gemäß Fig. 1 wird, wenn im (hier nicht gezeigten) Synchronwort-Detektor ein Synchronwort erkannt worden ist, ein im Synchronwort-Detektor für das Synchronwort erzeugter Impuls I einer Meßvorrichtung M zweifach zugeführt.

Die Meßvorrichtung M enthält einen Zähler 1 und ein Register 2.

In dem Artikel "Adaptive Clock Synchronization Schemes For Real-Time Traffic In Broadband Paket Networks" von R.P. Singh und S.H. Lee, auf den Seiten 84-88 der Druckschrift "Eurocon 88, 8th European Conference on Electrotechnics", Juni 1988, Stockholm werden Synchronisierungsverfahren, sogenannte "clock adjustment algorithm", für eine Breitband-Paket-Übertragung beschrieben. Auf der Empfangsseite wird eine Taktfrequenz $f_2(K)$ so geschätzt, daß sie möglichst wenig von der sendeseitigen Taktfrequenz $f_1(K)$ abweicht und jitterfrei ist (s. S. 87, Punkt 6). Dazu werden die zeitlichen Änderungen des Füllstandes des empfangsseitigen Pufferspeichers ("buffer level function") statistisch über eine oder zwei Zeitspannen ausgewertet. Weiterhin wird ein Kalman Filter zur Mitteilung des geschätzten Taktfrequenzfehlers $\Delta f(K)$ beschrieben. Der obige Artikel beschreibt komplexe statische Verfahren zur Ermittlung der gesuchten Taktfrequenz $f_2(K)$. Eine Vorrichtung mit Mitteln zum Demultiplexen eines zu einem Pulsrahmen asynchronen und durch einen Wartezeitjitter gestörten Datensignals wird nicht beschrieben.

Der Zähler 1 zählt nach Eingang eines Impulses I, durch einen vom nicht gezeigten Demultiplexer bereitgestellten Worttakt WT getaktet, die Zahl der Taktimpulse von Null bis zum nächsten Impuls I. Er hat dann einen Zählerstand $N_n$ erreicht, der ein Maß für den Zeitabstand zwischen diesen beiden Impulsen, also zwischen den beiden gerade aufeinanderfolgenden empfangenen Synchronwörtern ist. Möglich sind verschiedene Zählerstände $N_i$; dabei ist i=0, 1, 2, ..., m, ..., n, ....

Dieser Zählerstand $N_n$ wird in das Register 2 übertragen, wobei dieses durch den letzten Impuls I gesteuert wird.

Vom Register 2 gelangt der Zählerstand $N_n$ in ein ebenfalls durch die Impulse gesteuertes Filter F.

Das Filter F bildet aus dem zuletzt eingegangenen Zählerstand zusammen mit einer festgelegten Anzahl von vorher eingegangenen Zählerständen einen auf eine ganze Zahl gerundeten Mittelwert $N'$.

Dieser wird einem Signalerzeuger S zugeführt, der aus einem Abwärtszähler 3 und einem Komparator 4 besteht. Nach Eingang des Mittelwertes $N'$ zählt der Abwärtszähler 3, durch den Worttakt WT oder durch ein ganzzahliges Vielfaches des Worttaktes WT getaktet, vom Mittelwert $N'$ abwärts bis Null. Jeder Zahlenwert wird dem Komparator 4 zugeführt, der ihn mit dem Zahlenwert Null vergleicht. Wenn Null erreicht ist, erzeugt der Komparator aus dem Zahlenwert ein Synchronsignal SY, genauer: die Flanke eines Synchronsignals SY, wobei die Taktperiode des Synchronsignals SY gleich dem Mittelwert $N'$ ist. Das Synchronsignal SY dient einer Phasenregelschleife (PLL) als Eingangssignal. Es wird zurück zum Abwärtszähler 3 geführt, damit er den nächsten Mittelwert $N'$ aus dem Filter F aufnehmen kann.

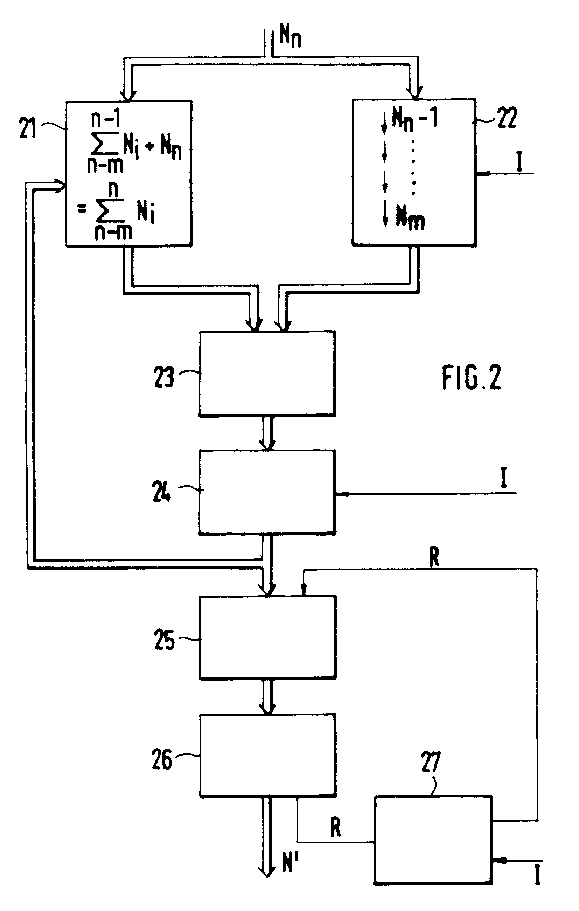

Fig. 2 zeigt ein erstes Ausführungsbeispiel des Filters F aus Fig. 1.

Ein Zählerstand $N_n$ wird sowohl einem Addierer 21, wo er zu einer Summe aus dem in Fig. 1 dargestellten Register 2 aus m Summanden der letzten Zählerstände bis $N_{n-1}$ hinzuaddiert wird

$$\sum_{i=n-m}^{n-1} N_i \; + \; N_n \; = \; \sum_{i=n-m}^{n} N_i$$

als auch einem Schieberegister 22 zugeführt, in dem die jeweils letzten m Zählerstände $N_{n-m}$ bis $N_{n-1}$ enthalten sind.

Immer dann, wenn das Schieberegister 22 durch einen Impuls I angesteuert wird, werden die Zählerstände $N_i$ um einen Speicherplatz verschoben, der neue Zählerstand $N_n$ in den freigewordenen Speicherplatz des Zählerstands $N_{n-1}$ gesetzt, und der "älteste" Zählerstand $N_{n-m}$ wird auf einen Subtrahierer 23 gegeben.

Dieser hat zwei Eingänge, von denen der eine mit dem Ausgang des Schieberegisters 22, der andere mit dem Ausgang des Addierers 21 verbunden ist. Er bildet die Differenz aus der Summe

$$\sum_{i=n-m}^{n} N_i \; + \; N_n \; = \; \sum_{i=n-m}^{n} N_i$$

vom Ausgang des Addierers 21 und dem Zählerstand $N_{n-m}$ des Schieberegisters 22:

$$\sum_{i=n-m}^{n} N_i \; - \; N_m \; = \; \sum_{i=n-m+1}^{n} N_i$$

Die vom Subtrahierer 23 gebildete Differenz wird einem Register 24 zugeführt, das wieder durch die Impulse I getaktet wird. Von dort gelangt sie einerseits zu einem weiteren Addierer 25, andererseits zurück zum Addierer 21, indem auf diese Weise die neue Summe

$$\sum_{i=n-m+1}^{n+1} N_i$$

gebildet wird.

Im Addierer 25 wird die Summe aus der Differenz und einem Rundungsfehler R gebildet. Die Summe wird einer Rechenschaltung 26 mit zwei Ausgängen zugeführt, die den arithmetischen Mittelwert der Zählerstände $N_i$ bildet und den erhaltenen Wert auf eine ganze Zahl N' rundet, diese an den Signalerzeuger S (s. Fig. 1) weiterleitet und den Rundungsfehler R einem Register 25 zuführt, das, durch die Impulse I getaktet, zeitgleich mit dem Eintreffen einer neuen Summe am Addierer 31 diesem den Rundungsfehler aus der vorhergehenden Rundung zuführt.

Die Rundungsfehler R werden verwendet, um die Taktfolgefrequenz im Mittel einzuhalten.

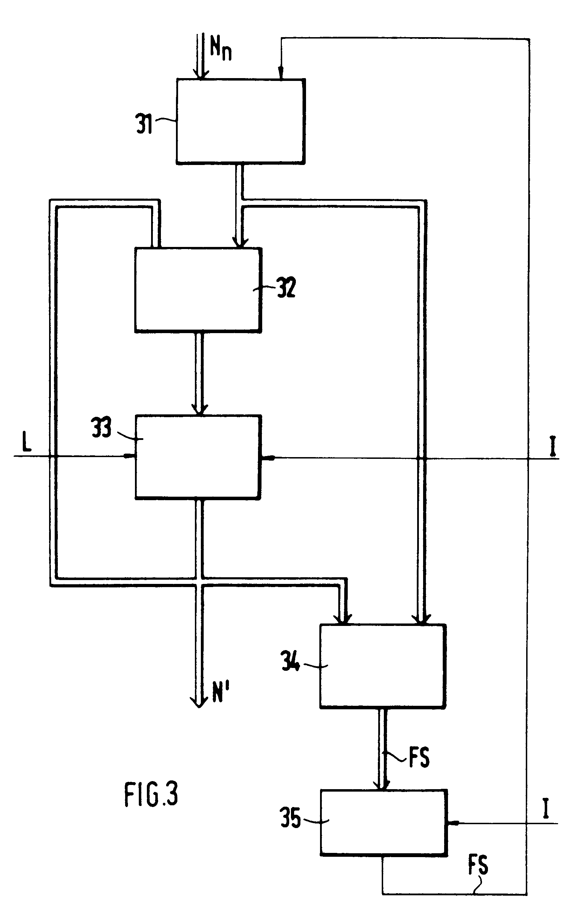

Ein weiteres Ausführungsbeispiel des Filters F ist in Fig. 3 dargestellt.

Es enthält eingangsseitig einen Addierer 31, der aus dem jeweils letzten Zählerstand $N_n$ aus dem Register 2 (Fig. 1) und einem Fehlersignal FS aus einem Register 35 die Summe bildet.

Diese wird einem Eingang eines Komparators 32 mit zwei Eingängen und einem Subtrahierer 34 zugeführt. Der Komparator 32 erhält über seinen anderen Eingang den Zählerstand vom Ausgang eines Zählers 33, den er mit dem Wert aus dem Addierer 31 vergleicht. Ist dieser kleiner als der Zählerstand des Zählers 33, so senkt der Komparator 32 dessen Zählerstand um 1; wenn umgekehrt der Wert aus dem Addierer 31 größer als der Zählerstand des Zählers 33 ist, so erhöht er dessen Zählerstand Sind beide Werte gleich, beläßt er ihn. Der Zähler 33 wird vor Inbetriebnahme der Schaltung über eine Leitung L auf einen angenommenen mittleren Zählerstand gesetzt, damit das Filter F von Anfang an arbeiten kann.

Der Zähler 33 wird durch die Impulse I getaktet. Sein Ausgang ist mit dem Eingang des in Fig. 1 gezeigten Signalerzeugers S und dem Subtrahierer 34 verbunden.

Der Subtrahierer 34 bildet die Differenz zwischen dem Zählerstand des Zählers 33 und der vom Addierer 31 erhaltenen Summe. Die vom Subtrahierer 34 gebildete Differenz stellt das Fehlersignal FS dar, das dem durch die Impulse I getakteten Register 35 zugeführt wird, das es beim Eintreffen des nächsten Zählerstandes $N_{n+1}$ am Eingang des Addierers 31 diesem zuführt. Der Addierer 31 bildet dann wieder die Summe aus dem Zählerstand $N_{n+1}$ und dem Fehlersignal FS.

Auf diese Weise läßt sich im Zähler 33 ein durchschnittlicher Zählerstand N' einstellen. Der Zähler gibt also ausgangsseitig viel geringere Schwankungen der Zählerstände an den Signalerzeuger S weiter, als am Addierer 31 eingangsseitig vorhanden sind.

## Patentansprüche

1. Demultiplexer für ein digitales Zeitmultiplex-Nachrichtenübertragungssystem, bei dem ein zum Pulsrahmen asynchrones Digitalsignal, das aus aufeinanderfolgenden Blöcken besteht, dessen Blockanfänge jeweils durch ein Synchronwort markiert sind, in den Pulsrahmen eingefügt wird, mit einer Schaltung, die aus dem Takt der empfangenen Folge der Synchronwörter ein Synchronsignal (SY) ableitet, das eine geringere Taktschwankung als der Takt der empfangenen Folge der Synchronwörter hat,
**dadurch gekennzeichnet,**
daß sie enthält: eine Meßvorrichtung (M), die die zeitlichen Abstände (N) zwischen den empfangenen Synchronwörtern mißt, ein Filter (F), das aus den zeitlichen Abständen (N) der Synchronwörter einen Mittelwert (N') bildet, und einen Signalerzeuger (S), der aus dem Mittelwert (N') ein Synchronsignal (SY) derart bildet, daß dessen Taktperiode gleich dem Mittelwert (N') ist.

2. Demultiplexer nach Anspruch 1,
dadurch gekennzeichnet,
daß das Filter (F) den arithmetischen Mittelwert (N') über die Abstände der verschiedenen, nacheinander im Laufe einer vorgegebenen Zeitspanne gemessenen Zeitabstände ($N_i$) aufeinanderfolgender Synchronwörter bildet, und ihn auf eine ganze Zahl N' rundet wobei der bei der Mittelwertbildung durch Rundung entstehende Rundungsfehler (R) über eine Fehlerrückführung für die darauffolgende Mittelwertbildung berücksichtigt wird.

3. Demultiplexer nach Anspruch 1,
dadurch gekennzeichnet,
daß das Filter (F) einen Zähler (33) enthält, in den vor Inbetriebnahme der Schaltung ein angenommener mittlerer Abstand von Synchronwörtern gespeichert wird, daß der Zähler (33) nur einmal während eines Abstandes zwischen zwei Synchronwörtern den in ihm gerade enthaltenen Zählerstand (N') um einen festen Betrag erhöhen oder senken kann oder ihn beläßt und daß die Änderung vom Ergebnis eines Zahlenvergleiches zwischen dem im Zähler (33) gespeicherten Zählerstand (N') einerseits und der Summe aus einem, am Eingang des Filters (F) nachfolgenden Zählerstand ($N_{n+1}$) und einem Fehlersignal (FS) andererseits bestimmt wird.

## Claims

1. A demultiplexer for a digital time-division multiplex communication system wherein a digital signal which is asynchronous with the pulse frame and consists of successive blocks whose beginnings are marked with sync words is inserted into the pulse frame, said demultiplexer comprising a circuit which derives from the clock signal of the received sync words a sync signal (SY) which exhibits less jitter than the clock signal of the received sync words,
**characterized in**
that the circuit contains a measuring device (M) which measures the time intervals (N) between the received sync words, a filter (F) which takes the average (N') of the time intervals (N) between the sync words, and a signal generator (S) which forms the sync signal (SY) from said average (N') in such a manner that the pulse period of the sync signal (SY) is equal to said average (N').

2. A demultiplexer as claimed in claim 1,
characterized in
that the filter (F) takes the average (N') of the different time intervals ($N_i$) between successive sync words successively over a predetermined period of time, and rounds it to an integer N', the rounding error (R) being taken into account for the subsequent averaging by error feedback.

3. A demultiplexer as claimed in claim 1,
characterized in
that the filter (F) includes a counter (33) in which an assumed mean distance between sync words is stored

4

EP 0 374 537 B1

before the circuit is put into operation, that the counter (33) can increase or decrease its count (N′) by a fixed amount only once during an interval between two sync words or leaves it unchanged, and that the change is determined by the result of a numerical comparison between the count (N′) of the counter (33) and the sum of a subsequent count (N_{n+1}) appearing at the input of the filter (F) and an error signal (FS).

**Revendications**

1. Démultiplexeur pour un système numérique de transmission de l'information en multiplexage par répartition dans le temps, dans le cas duquel on insère dans le train d'impulsions un signal numérique qui est asynchrone par rapport au train d'impulsions, qui est constitué de blocs successifs et dont les débuts de bloc sont chacun repérés par un mot de synchronisation, comportant un circuit qui, à partir du rythme de la suite, reçue, des mots de synchronisation, dérive un signal de synchronisation (SY) qui présente une fluctuation de rythme plus faible que celle du rythme de la suite, reçue, des mots de synchronisation,
caractérisé
par le fait qu'il contient: un dispositif de mesure (M) qui mesure les intervalles de temps (N) entre les mots de synchronisation reçus, un filtre (F) qui, à partir des intervalles de temps (N) des mots de synchronisation, forme une valeur moyenne (N′), et un producteur de signaux (S) qui, à partir de la valeur moyenne (N′), forme un signal de synchronisation (SY) de façon telle que sa période de rythme est égale à la valeur moyenne (N′).

2. Démultiplexeur selon la revendication 1,
caractérisé
par le fait que le filtre (F) forme la moyenne arithmétique (N′) des intervalles de temps pour les différents intervalles de temps (N_i), différents et successivement mesurés au cours d'une période de temps prescrite, des mots de synchronisation successifs, et arrondit cette valeur moyenne à un nombre entier N′, l'erreur d'arrondi (R), qui résulte de l'arrondi lors de la formation de la valeur moyenne, étant prise en compte, au moyen d'une rétroaction d'erreur, pour la formation de la valeur moyenne qui suit.

3. Démultiplexeur selon la revendication 1,
caractérisé
par le fait que le filtre (F) contient un compteur (33) dans lequel, avant mise en service du circuit, on mémorise un intervalle de temps moyen, admis, des mots de synchronisation, par le fait que le compteur (33) ne peut qu'élever ou abaisser, d'une valeur fixe, une fois pendant un intervalle de temps entre deux mots de synchronisation, l'état de comptage (N′) qui y est justement contenu, ou bien le laisser inchangé, et par le fait que cette modification est déterminée à partir du résultat d'une comparaison d'états de comptage entre d'une part l'état de comptage (N′) mémorisé dans le compteur (33) et d'autre part la somme d'un état de comptage suivant (N_{n+1}) à l'entrée du filtre (F) et d'un signal d'erreur (FS).

FIG.1

FIG.2

FIG.3